# FASCICULE DE BREVET EUROPEEN

(11) **EP 0 572 312 B1**
(45) Date de publication et mention de la délivrance du brevet: **11.10.1995**
(21) Numéro de dépôt: 93401334.3
(22) Date de dépôt: 25.05.1993
(51) Int. Cl.: F01D 11/00

(54) **Dispositif d'étanchéité entre des étages d'aubes de redresseur et un tambour tournant**
Dichtungseinrichtung zwischen Statorschaufelnstufen und einer Drehtrommel
Sealing arrangement between stator blade rows and a rotating rotor drum

(30) Priorité: 27.05.1992 FR 9206475
(43) Date de publication de la demande: 01.12.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Charbonnel, Jean-Louis, F-77350 Le Mée s/Seine (FR); Cordier, Jean-Christophe Marc Jacques Marie, F-77000 Melun (FR); Delahaye, Corinne Guylène, F-77720 Mormant (FR); Delonge, Jean-Claude Lucien, F-91100 Corbeil Essonnes (FR); Dusserre-Telmon, Guy Franck Paul, F-77115 Sivry Courtry (FR); Galivel, Jean-Pierre Elie, F-77176 Savigny le Temple (FR); Gille, Laurent, F-77000 Melun (FR); Naudet, Jacky, F-91070 Bondoufle (FR); Nouveau, Didier Maurice Louis, F-77190 Dammarie les Lys (FR); Tassin, Thierry Henri Marcel, F-91800 Brunoy (FR); Vermont, Gérard Robert Edmond René, F-77170 Coubert (FR)

(56) Documents cités:
- FR-A- 358 410
- FR-A- 379 209
- US-A- 3 079 128
- US-A- 4 375 292
- US-A- 4 995 620

## Description

L'invention concerne un dispositif pour assurer l'étanchéité entre des étages d'aubes et un tambour tournant par rapport à eux un tel dispositif est décrit dans le document FR-A-379 209. Elle peut notamment trouver usage dans des compresseurs de moteurs d'avion.

De telles machines comportent un rotor en forme de tambour qu'un stator entoure pour délimiter avec lui une veine annulaire d'écoulement des gaz. Cette veine est occupée par des étages d'aubes mobiles, tournant avec le rotor, qui alternent avec des étages d'aubes fixes liées au stator et destinées au redressement de l'écoulement des gaz après les passages de ceux-ci à travers les étages d'aubes mobiles, inclinées sur le côté.

Il convient que les aubes fixes s'étendent presque sur toute l'épaisseur de la veine annulaire afin d'éviter que des gaz ne puissent fuir entre l'arête de bord des aubes et le rotor , mais les conditions de fonctionnement du moteur et en particulier les températures varient fortement dans les différents régimes de fonctionnement et des dilatations thermiques différentes pourraient provoquer un frottement aux conséquences catastrophiques du rotor sur les arêtes des aubes fixes. Il faut donc accepter un jeu minimal à cet endroit, ce qui implique des pertes de rendement relativement importantes.

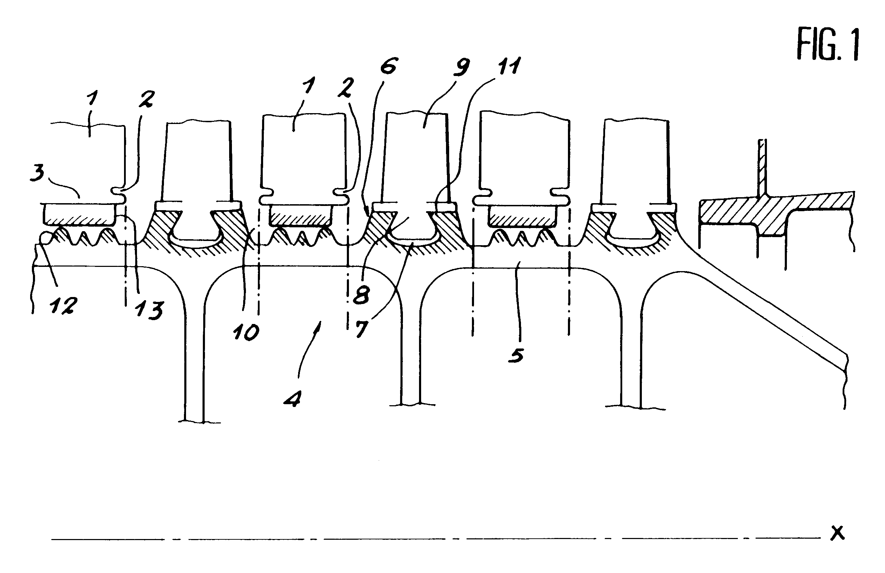

Une conception adoptée dans un moteur effectivement construit est supposée donner de meilleurs résultats en empêchant presque entièrement les fuites. Elle est représentée à la figure 1. Les aubes fixes 1 de chaque étage ont leurs arêtes de bord 2 réunies par un anneau 3. Le rotor 4 tournant autour de l'axe X est alors composé d'une virole 5 dont la génératrice est pratiquement rectiligne - afin d'éviter les concentrations de contraintes - et sur laquelle sont établis des bourrelets 6 circulaires qui contiennent les évidements 7 adaptés à l'insertion des pieds 8 des aubes mobiles 9. Des renfoncements 10 s'étendent entre les bourrelets 6 consécutifs, et les anneaux 3 affleurent à leur embouchure de manière à former avec les faces externes 11 des bourrelets 6 une surface sensiblement lisse et continue qui permet un écoulement régulier dans la veine. Le fond de chaque renfoncement 10 porte des léchettes 12, c'est-à-dire des crêtes circulaires dirigées vers les anneaux 3 ; ces derniers sont recouverts d'un matériau d'usure facile 13 qui peut être une structure en nid d'abeilles. La hauteur des léchettes 12 et l'épaisseur du matériau d'usure 13 sont choisies pour que les léchettes 12 viennent frotter sur le matériau d'usure 13 et l'éroder quand le moteur tourne de manière à former un joint à labyrinthe où les jeux sont très petits. On devrait ainsi éviter pratiquement toute circulation de gaz à travers les renfoncements 10. Mais la réalité est cependant autre car les services successifs de la machine sont effectués dans des conditions toujours un peu différentes, notamment en ce qui concerne la position du rotor par rapport aux aubes fixes 1, et l'érosion du matériau d'usure 13 se poursuit, de sorte que le jeu formé dans le joint à labyrinthe est agrandi, et les fuites apparaissent alors. De plus, les cavités délimitées dans les renfoncements 10 par les anneaux 3, les bourrelets 6 et le matériau d'usure 13 provoquent des turbulences de l'écoulement même en l'absence de fuites. Ce dispositif n'est donc pas dénué d'inconvénients.

L'invention est essentiellement originale en ce que des joints portés par les anneaux s'étendent jusqu'aux faces transversales des renfoncements. Plus précisément, elle est constituée d'étages d'aubes dans une veine annulaire d'écoulement de gaz et d'un tambour délimitant partiellement la veine et tournant par rapport aux aubes autour d'un axe coïncidant avec une direction longitudinale de la veine, les étages d'aubes étant terminés par des anneaux qui affleurent dans des renfoncements circulaires du tambour limités par deux faces transversales, les anneaux portant deux rainures circulaires logeant chacune un joint, et elle se caractérise en ce que les rainures sont ouvertes vers une des faces transversales respectives et sont munies de moyens pour repousser les joints hors des rainures et les presser sur les faces transversales.

Cet ensemble permet d'obtenir une étanchéité parfaite entre la veine annulaire et les renfoncements, qui ne peuvent plus servir d'exutoire aux fuites. Les joints sont situés de préférence aussi près que possible des parois délimitant la veine annulaire, afin de ne pas y produire de trop fortes variations des sections génératrices de turbulences. Ils sont repoussés par des moyens tels que des ressorts (notamment à lame circulaire) vers les faces transversales avec une force suffisamment faible pour éviter les frottements excessifs et l'usure correspondante, et une souplesse suffisante pour que l'effet des variations des positions longitudinales entre les pièces fixes et mobiles soit insensible. Quant aux variations radiales, elles n'ont aucune influence puisque le joint glisse simplement sur les faces transversales.

Un mode de réalisation avantageux est obtenu si les moyens pour repousser les joints sont des poils souples et élastiques comprimés entre des porte-joint coulissant dans les rainures et auxquels les joints sont fixés et les fonds des rainures. Les poils souples et élastiques peuvent alors commodément constituer les joints et s'étendre jusqu'aux faces transversales.

On connaît déjà des joints d'étanchéité circulaires et soumis à un effort longitudinal dans ce domaine technique, mais il s'agit de joints rigides à deux lèvres concentriques définissant une chambre qui doit être alimentée en gaz sous pression pour que les lèvres ne frottent pas sur la face transversale devant laquelle elles s'étendent. Des fuites plus importantes que dans l'invention sont donc inévitables, et l'alimentation en gaz sous pression pour chacun de ces joints représente un aménagement dispendieux.

L'invention peut être perfectionnée de butées amovibles portées par les anneaux pour retenir le joint dans les rainures dans certains états de fonctionnement, notamment pendant les essais de qualification du moteur.

On peut encore décider, afin d'obtenir un meilleur réglage de la position des joints et des efforts plus uniformes sur eux, que les anneaux seront composés de deux parties mobiles mutuellement dans la direction longitudinale de la veine, l'une étant fixée aux aubes et l'autre portant les rainures et les joints.

On va décrire maintenant l'invention plus en détail à l'aide des figures suivantes annexées à titre illustratif dont l'énumération suit :
- la figure 1 représente le dispositif d'étanchéité de l'art antérieur déjà décrit ;
- la figure 2 représente une vue de détail qui illustre l'invention ;
- les figures 3 et 4 représentent deux réalisations particulières de l'invention ;
- et la figure 5 représente un autre genre de joint utilisable pour l'invention.

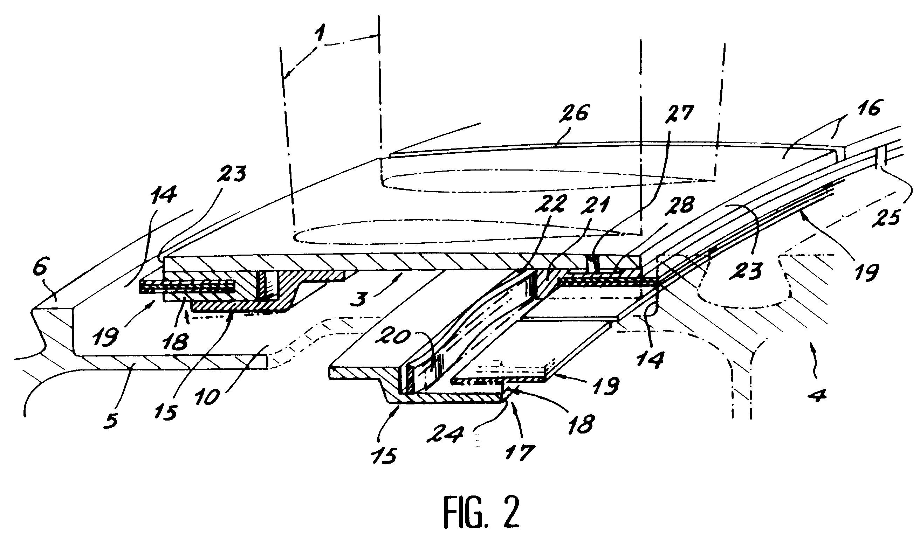

Les renfoncements 10 de la figure 2 ont un fond lisse et plat, dépourvu de léchettes, et sont limités par deux faces transversales 14 planes et circulaires des bourrelets 6. On retrouve la virole 5 droite (cylindrique ou conique) qui garantit une bonne uniformité des contraintes. Les anneaux 3 sont essentiellement constitués de plaques 16 qui s'étendent devant les renfoncements 10 et presque jusqu'aux faces transversales 14. Les aubes fixes 1 se raccordent à leurs faces extérieures, et leurs faces intérieures portent des collets 15 pliants qui occupent une partie des renfoncements 10 et peuvent être d'une pièce avec les plaques 16 ou soudés à elles. La forme d'origine des collets 15 est rectiligne et oblique pour s'éloigner assez nettement des plaques 16, comme les pointillés le montrent ; ils sont déformés ensuite, pendant l'assemblage de la machine, pour être rapprochés des plaques 16 et former avec elles des rainures circulaires 17 qui s'ouvrent vers les faces transversales 14. Les rainures 17 reçoivent chacune un porte-joint 18 à section en U qui contient un joint 19 circulaire dont l'extrémité libre dépasse du porte-joint 18 et de la rainure 17 respective pour frotter contre une des faces transversales 14. Cela est obtenu grâce à des ressorts à lame 20 glissés dans les rainures 17 entre leur fond 22 et le fond 21 des porte-joint 18. L'effort d'application des joints 19 sur les faces transversales 14 est défini par les dimensions des pièces et la raideur des ressorts 20. Dans la réalisation représentée, les plaques 16 ont un bord longitudinal 23 qui dépasse du bord longitudinal 24 des collets 15. Si la pression dans la veine annulaire est forte, on conseille d'inverser cette relation afin que les collets 15 soutiennent bien les porte-joint 18.

Des moyens connus tels que des vis sans tête 27 amovibles et engagées dans des perçages des plaques 16 et dont l'extrémité pénètre dans une rainure 28 longitudinale d'un porte-joint 18 empêchent ceux-ci de tourner dans les rainures 17. Les rainures 28 peuvent aussi servir de moyen de butée longitudinale pour empêcher les joints 19 de trop sortir des rainures 17. Il suffit alors de limiter leur longueur en conséquence pour que la vis sans tête 27 bute contre leur extrémité.

En pratique, les porte-joint 18, les joints 19 et les ressorts à lame 20 sont divisés en secteurs pour permettre le montage de la machine. Les intervalles 25 entre porte-joint et joints sont alors décalés par rapport à ceux 26 qui séparent les plaques 16 afin d'éviter à ces endroits, les communications entre la veine annulaire et les renfoncements 10. D'autres moyens, et notamment d'autres joints, sont envisageables pour boucher les parties des intervalles 26 entre les secteurs des anneaux 3 qui sont situées entre les paires de rainures 17. Les joints 19 peuvent être par exemple en carbone, en composite, en tresse métallique, à lamelles, à brosse. D'autres matériaux connus sont envisageables. Le choix est large car ils sont montés souplement et avec des déplacements limités et ne sont donc pas pressés contre les faces transversales 14 avec une force qui les userait prématurément.

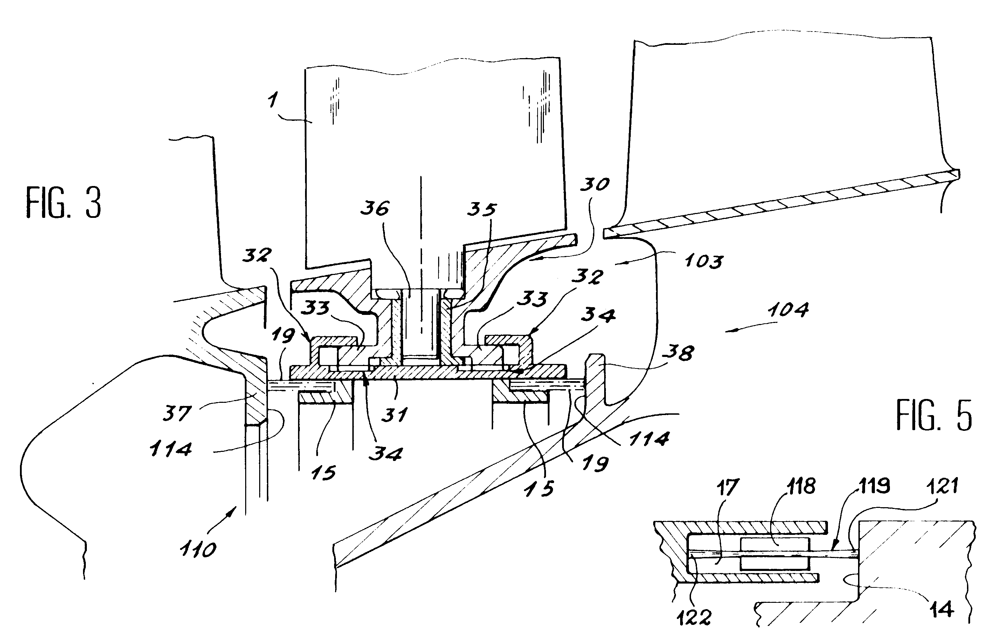

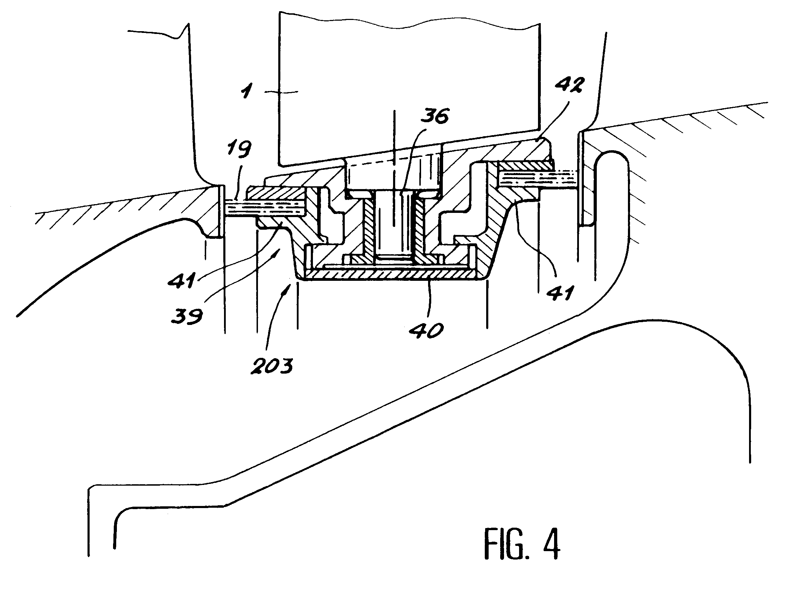

Les figures 3 et 4 représentent deux autres réalisations de l'invention où les anneaux sont référencés par 103 et 203. Ils se composent de deux parties : une partie 30 liée aux aubes fixes 1 et une partie 31 qui porte les collets 15 et les joints 19. Ces deux parties 30 et 31 sont mobiles entre elles dans le sens longitudinal de la veine annulaire. A cet effet, la seconde partie 31 est munie de cornières 32 qui retiennent contre elles des tubes de glissement 33 de la première partie 30 tout en permettant aux tubes de glissement 33 de s'enfoncer dans leur anfractuosité et d'en sortir partiellement. Des cannelures 34 sont prévues entre les deux parties 30 et 31 pour empêcher qu'elles ne tournent l'une par rapport à l'autre.

Les renfoncements 110 sont ici plus profonds et les anneaux 103, et plus précisément leur première partie 30, ont une grande extension radiale car les aubes fixes 1 sont montées pivotantes pour qu'on puisse faire varier leur inclinaison selon le régime de la machine. Le mécanisme de commande de l'inclinaison est placé autour des étages d'aubes fixes 1 et n'apparaît donc pas sur les figures. Les anneaux 103 comprennent uniquement des moyens pour permettre le pivotement des aubes fixes 1. Les premières parties 30 sont donc aménagées en conséquence et contiennent une douille 35 antifriction entourant l'axe de pivotement 36 des aubes fixes 1. Dans ces conditions, les faces transversales 114 du rotor 104 sur lesquelles les joints 19 frottent ne sont pas établies à proximité immédiate de la veine annulaire mais à quelque distance radiale de celle-ci, sur des saillies circulaires 37 ou 38 d'orientation radiale et qui peuvent être dirigées vers l'intérieur ou vers l'extérieur selon le cas. Des volumes beaucoup plus grands existent alors entre la veine annulaire et les joints 19, mais les écoulements indésirables et les turbulences y sont évités dans une large mesure à cause des fermetures étanches obtenues grâce aux joints 19.

Le dispositif de la figure 4 est un peu différent : on choisit de ramener les joints 19 près de la veine annulaire, de sorte que la partie mobile qui porte des anneaux 203 se compose d'une plaque intérieure 40 et de deux couronnes à porte-joint 41 qui s'étendent à hauteur de l'axe de pivotement 36. Un système de coulisse de la partie mobile 39 par rapport à la partie fixe 42 des anneaux 203, construite pratiquement comme la partie 30, permet encore de compenser les déformations dans la machine pour instaurer un effort identique sur les deux joints 19.

On a illustré sur la figure 5 des joints d'un autre genre que ceux de la figure 2, qu'ils peuvent remplacer. Les ressorts 20 sont omis et les joints 119 sont ici composés d'une bordure de poils souples fixée aux porte-joint 118, dont un bord 121 frotte sur les faces transversales 14 et dont l'autre bord 122 touche le fond des rainures 17 (le joint 19 de l'exemple de la figure 2 pouvait consister en d'autres produits et notamment en des lèvres continues de matière flexible et élastique). Les porte-joint 118 coulissent ici encore librement dans les rainures 17. Les avantages de cette disposition-ci sont une étanchéité encore meilleure, un choix plus aisé de l'effort de pressage des joints et une plus grande tolérance aux déplacement axiaux entre le rotor et le stator de la machine.

En effet, les écoulements de gaz par l'intérieur des rainures sont contrariés par le bord 122 qui fait office de joint statique, il est possible de réduire la compression des poils en coupant la longueur qu'on souhaite de leurs bouts avant de les monter dans les rainures 17, et les déplacements axiaux du rotor dans le stator se répercutent sur les joints par une flexion des poils qui produit un effort élastique variant assez peu selon l'importance de la flexion, contrairement à ce qui se passe pour de nombreux ressorts usuels. L'importance de cet effort dépend en particulier de la longueur libre des poils du côté du bord 122.

Un corollaire de ce dernier effet est que la pression de contact des joints 119 sur les faces transversales 14 est peu sensible aux déplacements axiaux du rotor dans le stator et que les risques de freinage du rotor par les joints sont considérablement réduits même si les joints 119 sont fort comprimés.

Ces divers genres de réalisation peuvent bien entendu être utilisés côte à côte sur différents étages d'un même appareil.

## Revendications

1. Dispositif constitué d'étages d'aubes (1) dans une veine annulaire d'écoulement de gaz et d'un tambour (4, 104) délimitant partiellement la veine et tournant par rapport aux aubes (1) autour d'un axe (X) coïncidant avec une direction longitudinale de la veine, les étages d'aubes étant terminés par des anneaux (3, 103, 203) qui affleurent dans des renfoncements circulaires du tambour limités par deux faces transversales (14, 114), les anneaux portant deux rainures circulaires (17) logeant chacune un joint (19), caractérisé en ce que les rainures sont ouvertes vers une des faces transversales respective et sont munies de moyens (20, 122) pour repousser les joints hors des rainures et les presser sur les faces transversales.

2. Dispositif suivant la revendication 1, caractérisé en ce que les moyens pour repousser les joints sont des ressorts à lame (20) situés au fond (22) des rainures (17).

3. Dispositif suivant l'une quelconque des revendications 1 ou 2, caractérisé en ce que les anneaux portent des butées amovibles (27, 28) pour retenir les joints (19) dans les rainures (17).

4. Dispositif suivant l'une quelconque des revendications 1 à 3, caractérisé en ce que les rainures sont limitées par deux bords (23, 24) de hauteurs différentes.

5. Dispositif suivant l'une quelconque des revendications 1 à 4, caractérisé en ce que les anneaux comprennent des collets pliants (15) situés dans les renfoncements pour former un des bords des rainures.

6. Dispositif suivant l'une quelconque des revendications 1 à 5, caractérisé en ce que les anneaux sont composés de deux parties (30, 31, 39, 42) mobiles mutuellement dans la direction longitudinale de la veine, l'une étant fixée aux aubes et l'autre portant les rainures.

7. Dispositif suivant l'une quelconque des revendications 1 à 6, caractérisé en ce que les aubes sont montées pivotantes sur les anneaux.

8. Dispositif suivant l'une quelconque des revendications 1 à 7, caractérisé en ce que les moyens pour repousser les joints sont des poils souples et élastiques comprimés entre des porte-joint (118) coulissant dans les rainures (17) et auxquels les joints (119) sont fixés et les fonds des rainures (17).

9. Dispositif suivant la revendication 8, caractérisé en ce que les poils souples et élastiques constituent les joints (119) et s'étendent jusqu'aux faces transversales (14).

## Claims

1. Device consisting of blade (1) stages in an annular gas flow stream and a drum (4, 104), partially defining the stream and rotating with respect to the blades (1) about an axis (X) coinciding with a longitudinal direction of the stream, the blade stages being terminated by rings (3, 103, 203) which are flush in circular reinforcements of the drum which are bounded by two transverse faces (14, 114), the rings bearing two circular grooves (17) which each house a seal (19), characterized in that the grooves are open towards one of the respective transverse faces and are provided with means (20, 122) for pushing the seals out of the grooves and pressing them onto the transverse faces.

2. Device according to Claim 1, characterized in that the means for pushing the seals are leaf springs (20) located at the bottom (22) of the grooves (17).

3. Device according to either of Claims 1 and 2, characterized in that the rings bear removable stops (27, 28) for retaining the seals (19) in the grooves (17).

4. Device according to any one of Claims 1 to 3, characterized in that the grooves are limited by two edges (23, 24) with different heights.

5. Device according to any one of Claims 1 to 4, characterized in that the rings comprise pliable collars (15) located in the reinforcements in order to form one of the edges of the grooves.

6. Device according to any one of Claims 1 to 5, characterized in that the rings are composed of two parts (30, 31, 39, 42) which are mutually mobile in the longitudinal direction of the stream, one being fixed to the blades and the other bearing the grooves.

7. Device according to any one of Claims 1 to 6, characterized in that the blades are mounted so as to pivot on the rings.

8. Device according to any one of Claims 1 to 7, characterized in that the means for pushing the seals are flexible and elastic bristles compressed between seal holders (118) sliding in the grooves (17), to which holders the seals (119) are fixed, and the bottoms of the grooves (17).

9. Device according to Claim 8, characterized in that the flexible and elastic bristles constitute the seals (119) and extends as far as the transverse faces (14).

## Patentansprüche

1. Vorrichtung bestehend aus Schaufelstufen (1) in einem ringförmigen Gasausflußstrom und einer Trommel (4,104), die teilweise den Strom begrenzt und sich bezüglich der Schaufeln (1) um eine Achse (X) dreht, die mit einer Längsrichtung des Stroms zusammenfällt, wobei die Schaufelstufen in Ringen (3,103,203) enden, die in den ringförmigen Verstärkungen der Trommel anliegen, die durch zwei Querseiten (14,114) begrenzt sind, und die Ringe zwei ringförmige Nuten (17) aufweisen, die jeweils eine Dichtung (19) aufnehmen,
dadurch **gekennzeichnet**,
daß die Nuten in Richtung einer jeweiligen der Querseiten offen sind und mit Mitteln (20,122) zum Drücken der Dichtungen aus den Nuten heraus und zum Andrücken an die Querseiten versehen sind.

2. Vorrichtung nach Anspruch 1,
dadurch **gekennzeichnet,**
daß die Mittel zum Herausdrücken der Dichtungen Blattfedern (20) sind, die sich am Grund (22) der Nuten (17) befinden.

3. Vorrichtung nach einem der Ansprüche 1 oder 2,
dadurch **gekennzeichnet**,
daß die Ringe lösbare Anschläge (27,28) zum Zurückhalten der Dichtungen (19) in den Nuten (17) tragen.

4. Vorrichtung nach einem der Ansprüche 1 bis 4,
dadurch **gekennzeichnet,**
daß die Nuten durch zwei Ränder (23,24) mit unterschiedlicher Höhe begrenzt sind.

5. Vorrichtung nach einem der Ansprüche 1 bis 4,
dadurch **gekennzeichnet,**
daß die Ringe umgebogene Borte (15) aufweisen, die sich in den Verstärkungen zur Bildung der Ränder der Nuten befinden.

6. Vorrichtung nach einem der Ansprüche 1 bis 5,
dadurch **gekennzeichnet,**
daß die Ringe aus zwei Abschnitten (30,31,39,42) gebildet sind, die gegeneinander in der Längsrichtung des Stroms beweglich sind, wobei der eine an den Schaufeln befestigt ist und der andere Nuten trägt.

7. Vorrichtung nach einem der Ansprüche 1 bis 6,
dadurch **gekennzeichnet,**
daß die Schaufeln drehbar auf den Ringen angebracht sind.

8. Vorrichtung nach einem der Ansprüche 1 bis 7,
dadurch **gekennzeichnet,**
daß die Mittel zum Drücken der Ringe weiche und elastische Haar-Elemente sind, die zwischen Dichtungsträgern (118), die in den Nuten (17) verschiebbar sind und an denen die Dichtungen (119) befestigt sind, und in den Gründen der Nuten (17) eingequetscht sind.

9. Vorrichtung nach Anspruch 8,
dadurch **gekennzeichnet,**
daß die weichen und elastischen Haar-Elemente die Dichtungen (119) bilden und sich bis zu den Querseiten (14) erstrecken.
